# EUROPÄISCHE PATENTSCHRIFT

(11) **EP 1 342 928 B1**
(45) Veröffentlichungstag und Bekanntmachung des Hinweises auf die Patenterteilung: **05.01.2011**
(21) Anmeldenummer: 03002423.6
(22) Anmeldetag: 05.02.2003
(51) Int. Cl.: F16C 29/06, F16C 33/38, F16C 33/50

(54) **Linearwälzlager**
Linear rolling bearing
Palier linéaire à billes

(30) Priorität: 07.03.2002 DE 10210053
(43) Veröffentlichungstag der Anmeldung: 10.09.2003
(73) Patentinhaber: Schaeffler Technologies GmbH & Co. KG, 91074 Herzogenaurach (DE)
(72) Erfinder: Hausberger, Franziska, 66113 Saarbrücken (DE); Menges, Martin, 66424 Homburg (DE); Winkler, Thomas, 66280 Sulzbach (DE)
(74) Vertreter: Heinzelmann, Ingo

(56) Entgegenhaltungen:
- EP-A- 0 846 880
- EP-A- 0 890 754
- DE-U- 8 625 602
- US-A- 5 082 375
- PATENT ABSTRACTS OF JAPAN Bd. 1998, Nr. 09, 31. Juli 1998 (1998-07-31) -& JP 10 110728 A (THK KK), 28. April 1998 (1998-04-28)
- PATENT ABSTRACTS OF JAPAN Bd. 1999, Nr. 04, 30. April 1999 (1999-04-30) -& JP 11 002241 A (THK KK), 6. Januar 1999 (1999-01-06)

## Beschreibung

Die vorliegende Erfindung betrifft Linearwälzlager mit einem an einer Führungsschiene über Wälzkörper wälzlagerbaren Führungswagen. Derartige Linearwälzlager werden beispielsweise im Werkzeugmaschinenbau eingesetzt, wobei beispielsweise ein Werkzeug oder ein Werkstück an dem Führungswagen befestigt und entlang der Führungsschiene verschoben werden kann.

Aus der gattungsbildenden EP 0 846 880 A1 ist beispielsweise ein Linearwälzlager bekannt geworden, dessen Führungswagen mit wenigstens einem endlosen Wälzkörperkanal für Wälzkörper versehen ist. Dieser Wälzkörperkanal umfasst einen Tragkanal für tragende Wälzkörper, einen Rücklaufkanal für rücklaufende Wälzkörper und zu beiden Enden des Tragkanals und des Rücklaufkanals je einen diese endlos miteinander verbindenden Umlenkkanal, in dem die Wälzkörper aus dem Rücklaufkanal in den Tragkanal und umgekehrt umgelenkt werden. Die Wälzkörper sind in Taschen eines zwei freie Enden aufweisenden Käfigbandes aufgenommen, dass in Laufrichtung gesehen zwischen aufeinander folgenden Wälzkörpern angeordnete, die Käfigtaschen begrenzende Distanzstücke und zu beiden Seiten der Wälzkörperreihe angeordnete, die Distanzstücke miteinander verbindende Käfiggurte aufweist, wobei die Käfiggurte in Führungskanälen des Wälzkörperkanals aufgenommen sind, um das Käfigband im Wälzkörperkanal zu führen. Der Führungskanal ist durch eine offene Nut gebildet Während des Betriebs des Linearwälzlagers läuft die Kugelkette endlos im Wälzkörperkanal um, wobei die Kugeln an Laufbahnen der Schiene und des Führungswagens abwälzen. Das Käfigband wird aus seiner längsgestreckten Lage in eine Kurvenbahn umgelenkt, wenn es den Tragkanal oder den Rücklaufkanal verlässt und in den Umlenkkanal eintritt. Um zu verhindern, dass die freien Enden des Käfigbandes verkanten können, wenn diese aus der Längsrichtung in die Kurvenbahn umgelenkt werden, sind die Käfiggurte abgerundet, wobei eine angenommene Mittelpunktachse diese Abrundung senkrecht auf dem längsgestreckten Käfiggurt steht. Diese abgerundeten Käfiggurte münden in ein gemeinsames Distanzstück.

Über die Betriebszeit gesehen kann sich das Käfigband in Folge mechanischer Beanspruchung, Temperatureinflüssen, Verschleiß usw. verformen. In Folge dieser Verformung kann sich das Käfigband längen. Das bedeutet, dass die einander benachbarten freien Enden des Käfigbandes miteinander in Kontakt geraten können. Insbesondere wenn eines der beiden freien Käfigenden bereits in den Umlenkkanal eingetreten ist, während sich das andere freie Ende noch im Tragkanal oder im Rücklaufkanal befindet, sind diese beiden einander benachbarten freien Käfigenden schiefwinklig zueinander ausgerichtet. Im Falle eines Kontaktes der beiden freien Käfigenden miteinander kann es nun zu einem Verhaken kommen, denn die angespitzten freien Enden umschreiben gemeinsam mit dem seitlich einmündenden Käfiggurten eine eckige Kontur, die dieses Verhaken begünstigt. Das Verhaken der freien Käfigenden miteinander kann jedoch zu einer Blockierung und somit zu einem Versagen und zur Zerstörung des Linearwälzlagers führen.

Aufgabe der vorliegenden Erfindung ist es daher, ein Linearwälzlager nach den Merkmalen des Oberbegriffs des Anspruchs 1 anzugeben, bei dem die freien Enden des Käfigbandes einwandfrei geführt sind, ohne das ein Kontakt der einander benachbarten freien Käfigenden miteinander den einwandfreien Umlauf des Käfigbandes stört.

Erfindungsgemäß wird diese Aufgabe dadurch gelöst, dass einander benachbarte freie Enden des Käfigbandes jeweils mit einem im Wesentlichen quer zum Käfigband angeordneten, frei auskragenden und beweglichen Schenkel versehen sind, wobei die Schenkel an ihren einander zugewandten Seiten jeweils eine Anlagefläche füreinander aufweisen und wobei der Schenkel an ein Distanzstück oder ein davon abweichend ausgebildetes Teil anschließt. Wenn - in dem oben eingangs erörterten Fall - dass eine freie Käfigende bereits in den Umlenkkanal eingetreten ist, während das benachbarte freie Ende des Käfigbandes sich noch in dem Tragkanal oder in dem Rücklaufkanal befindet, kann es zu einem Kontakt zwischen den beiden Schenkeln der beiden freien Enden kommen. Da die Schenkel quer zum Käfigband angeordnet sind, begrenzen sie in dieser Situation einen keilförmigen Spalt. Eine Berührung der beiden Schenkel miteinander findet dann unterhalb der Käfiggurte statt, oder in anderen Worten ausgedrückt innerhalb der Fläche, die von dem Wälzkörperkanal umfahren wird. Unter diesem Kontakt lenken beide Schenkel aus, dass heißt sie richten sich aneinander aus. Der Kontaktpunkt der beiden Schenkel wandert demzufolge in Richtung auf den Käfiggurt, wobei eine Druckkraft - sofern diese wirksam ist - zwischen dem einander anliegenden Anlageflächen in Höhe der Käfiggurte übertragen wird. In anderen Worten: Eine möglicherweise auftretende Druckkraft wird in der neutralen Phase des Käfigbandes übertragen, so dass keine unerwünschten Kräfte quer zum Käfiggurt eingeleitet werden. Die Anlageflächen sind dabei vorzugsweise glatt und eben ausgebildet. Sie können aber auch glatt sein und eine leicht gekrümmte Kontur aufweisen, wobei eine angenommene Mittelpunktachse dieser gekrümmten Kontur quer zur Laufrichtung der Wälzkörper und senkrecht auf einer Ebene angeordnet ist, in der die Wälzkörper umlaufen. Der einwandfreie Umlauf des Käfigbandes kann auch dadurch begünstigt werden, dass die Enden der Käfiggurte abgerundet sind, wobei eine angenommene Mittelpunktachse dieser Abrundung quer zur Laufrichtung der Wälzkörper und senkrecht auf einer Ebene angeordnet ist, in der die Wälzkörper umlaufen. Derartige Abrundungen an Distanzstücken an sich sind beispielsweise aus JP 63-123824 U1 bekannt.

Die Schenkel sind vorzugsweise innerhalb einer von dem Wälzkörperkanal begrenzten Querschnittsöffnung und außerhalb der oben erwähnten Führungskanäle angeordnet. Wenn als Wälzkörper Rollen eingesetzt werden, ist es besonders vorteilhaft, wenn der Schenkel im wesentlichen die Querschnittsöffnung des Wälzkörperkanals ausfüllt; also in Laufrichtung der Wälzkörper gesehen umschreibt dann der Schenkel im Wesentlichen eine rechteckige bzw. viereckige Kontur. Jedenfalls umspannt der Schenkel in dem Wälzkörperkanal eine hinreichend große Fläche, die so bemessen ist, dass ein miteinander Verhaken einander benachbarter Schenkel und ein Auslenken der Schenkel ausgeschlossen ist. Da der Schenkel frei auskragend ist, kann die erforderliche Beweglichkeit dadurch erzielt werden, dass die Schenkel dünnwandig aus einem biegsamen Kunststoff geformt sind, so dass die Schenket mit ihren freien Schenkelenden auslenkbar sind, ohne das nennenswerte Kräfte erforderlich sind. Der Schenkel ist vorzugsweise plattenförmig ausgebildet, wobei die von dem freien Ende des Käfigbandes abgewandte Vorderseite des Schenkels eben ist. Wenn einander benachbarte plattenförmige Schenkel miteinander in Kontakt geraten findet eine gleitende Bewegung zwischen den miteinander in Kontakt stehenden Anlageflächen der Schenkel statt, ohne das ein Verkanten oder ein Verhaken erfolgen könnte.

Der Schenkel ist vorzugsweise etwa in Höhe des Käfiggurte einstückig an das Distanzstück und/oder an die Käfiggurte angeformt und erstreckt sich von dort in Richtung einer senkrecht auf der Käfiggurtunterseite angeordneten Raumachse. Da - wie weiter oben erwähnt wurde - die Schenkel beweglich sind und sich aneinander ausrichten, erfolgt die Übertragung einer möglicherweise entstehenden Druckkraft zwischen den Anlageflächen lediglich in Höhe des Gurtes, also in der neutralen Phase, ohne das Kräfte quer zur Laufrichtung auf das Käfigband einwirken. Eine einwandfreie Führung des Käfigbandes ist somit gewährleistet.

Für manche Anwendungen mag es zweckmäßig sein, wenn der Schenkel sich zusätzlich in Richtung einer senkrecht auf der Käfiggurtoberseite angeordneten Raumachse erstreckt, also T-förmig ausgebildet ist. Diese erfindungsgemäße Weiterbildung bietet den Vorteil, dass das Käfigband in das Linearwälzlager eingeführt werden kann, ohne das auf eine Käfigbandunterseite oder Käfigbandoberseite geachtet werden braucht.

Die erfindungsgemäß vorgesehene Beweglichkeit der Schenkel kann über ein Gelenk ermöglicht sein, dass den Schenkel mit dem Distanzstück und/oder den beiden Käfiggurten verbindet. In diesem Fall kann der Schenkel an sich aus einem starren Material gebildet sein. Dieses Gelenk kann beispielsweise durch ein Filmgelenk gebildet sein. Ein derartiges Filmgelenk kann bereits im Spritzwerkzeug vorgesehen sein, so dass seine Ausbildung technisch einfach und wirtschaftlich interessant ist.

Ähnlich wie ein Filmgelenk kann auch ein federelastisch auslenkbarer Steg vorgesehen sein, der einerseits an dem Schenkel und der andererseits an dem Distanzstück und/oder den beiden Käfiggurten anschließt. Auch diese erfindungsgemäße Weiterbildung eignet sich in besonderer Weise für die Herstellung des Käfigbandes im Spritzverfahren.

Der Schenkel und das Gelenk können einstückig mit dem Distanzstück oder den beiden Käfiggurten verbunden sein. Auch diese Variante eignet sich in besonderer Weise für ein Spritzverfahren, bei dem das Käfigband aus Kunststoff gebildet ist.

Anstelle eines Gelenkes kann jedoch der Schenkel an sich biegeweich ausgebildet sein. Dies kann dadurch ermöglicht sein, dass der Schenkel dünnwandig aus einem biegbaren Kunststoff gebildet ist.

Das Teil, an das der Schenkel anschließt kann erfindungsgemäß ein Distanzstück sein, aber auch davon abweichend ausgebildet sein.

Um sicherzustellen, dass eine gegebenenfalls auftretende Druckkraft zwischen den beiden aneinander anliegenden Käfigenden in Höhe des Käfiggurtes übertragen wird, kann der Schenkel in Höhe des Käfiggurtes eine Erhebung als Teil der Anlagefläche aufweisen. Wenn sich die aneinander ausrichtenden freien Enden des Käfigbandes zunächst unterhalb des Käfiggurtes berühren, findet der weitere Kontakt an diesen erhabenen Stellen statt, so dass sichergestellt ist, dass die Übertragung einer Druckkraft in Höhe des Käfiggurtes erfolgt.

Nachstehend wird die Erfindung anhand von in den Figuren abgebildeten Ausführungsbeispielen näher erläutert. Es zeigen:
- Figur 1: einen Querschnitt durch ein erfindungsgemäßes Linearwälzlager,
- Figur 2: ein Detail der Figur 1 in vergrößerter Darstellung,
- Figur 3: eine perspektivische Darstellung des Führungswagens des erfin- dungsgemäßern Linearwälzlagers,
- Figur 4: einen Längsschnitt durch das Linearwälzlager,
- Figur 5: eine perspektivische Darstellung des Käfigbandes,
- Figur 6: eine perspektivische Darstellung eines modifizierten Käfigbandes,
- Figur 7: eine Seitenansicht eines modifizierten erfindungsgemäßen Käfig- bandes,
- Figur 8: ein freies Ende eines nicht erfindungsgemäßen Käfigbandes und
- Figur 9: ein weiteres modifiziertes freies Ende eines erfindungsgemäßen Käfigbandes.

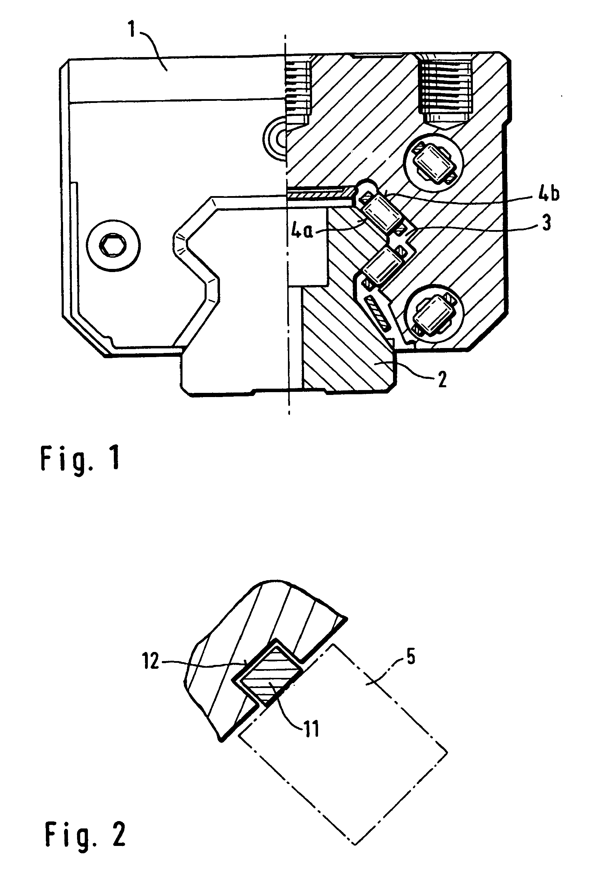

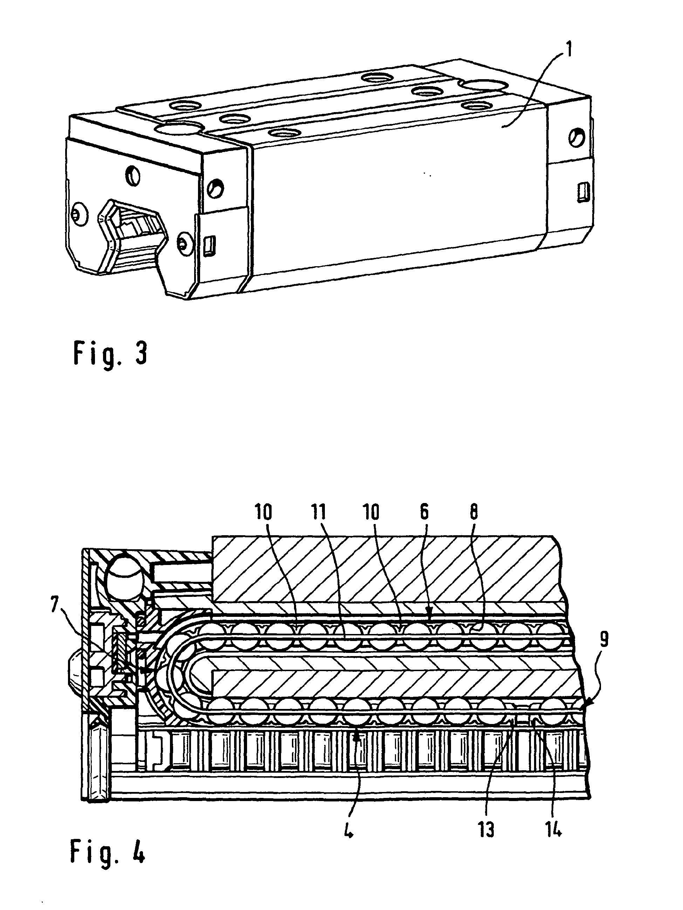

Die Figuren 1 bis 4 zeigen den Aufbau eines erfindungsgemäßen Linearwälzlagers. Ein Führungswagen 1 ist auf einer Führungsschiene 2 wälzgelagert. Der Führungswagen 1 ist mit vier endlosen Wälzkörperkanälen 3 versehen, die zwei Paare bilden. Die beiden endlosen Wälzkörperkanäle 3 eines Paares stehen senkrecht aufeinander. Beide Paare der Wälzkörperkanäle 3 sind spiegelsymetrisch zur Mittellängsachse der Führungsschiene 2 angeordnet. Der Wälzkörperkanal 3 umfasst einen Tragkanal 4 für tragende Rollen 5, einen Rücklaufkanal 6 für rücklaufende Rollen 5 und zu beiden Enden des Tragkanals 4 und des Rücklaufkanals 6 je einen diese endlos miteinander verbindenden Umlenkkanal 7, in dem die Rollen 5 aus dem Rücklaufkanal 6 in den Tragkanal 4 und umgekehrt umgelenkt werden. Im Tragkanal 4 wälzen die Rollen 5 an zueinander parallelen Laufbahnen 4a, 4b ab, von denen die eine Laufbahn 4a an der Führungsschiene 2 und von denen die andere Laufbahn 4b an dem Führungswagen 1 ausgebildet ist. Die Rollen 5 sind in Taschen 8 eines Käfigbandes 9 aufgenommen, das in Laufrichtung gesehen zwischen aufeinander folgenden Rollen 5 angeordnete, die Käfigtaschen 9 begrenzende Distanzstükke 10 aufweist. Zu beiden Seiten der Rollen 5 sind Käfiggurte 11 vorgesehen, die einstückig mit den Distanzstücken 10 verbunden sind, wobei die Käfiggurte 11 in Führungskanälen 12 des Wälzkörperkanals 3 geführt sind. Das Käfigband 9 weist zwei freie Enden 13, 14 auf, wie das in der Figur 4 gezeigt ist.

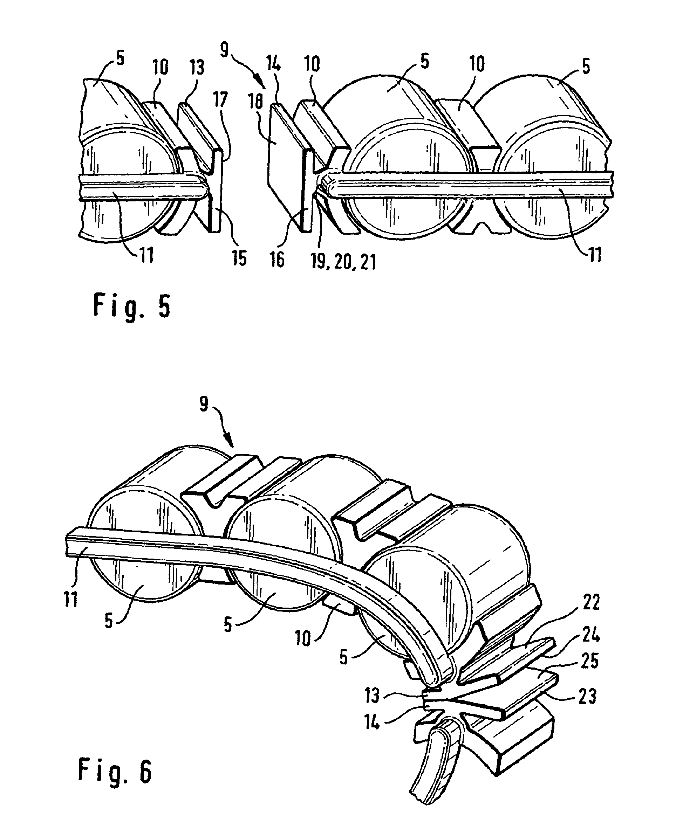

Die besondere Ausbildung dieser freien Enden 13, 14 wird anhand der Figuren 5 bis 9 nachstehend näher beschrieben.

Figur 5 zeigt ein erfindungsgemäßes Käfigband 9 mit einander gegenüberliegenden, benachbart angeordneten freien Enden 13, 14. Die freien Enden 13, 14 sind jeweils mit einem im Wesentlichen quer zum Käfigband 9 angeordneten und beweglichen Schenkel 15, 16 versehen, wobei die Schenkel 15, 16 an ihren einander zugewandten Seiten jeweils eine Anlagefläche 17 ,18 füreinander aufweisen.

Die Schenkel 15, 16 sind plattenförmig ausgebildet, wobei die von dem freien Ende des Käfigbandes 9 abgewandte Vorderseite des Schenkels 15, 16 eben ist. In anderen Worten: Die einander zugewandten Anlageflächen 17, 18 sind eben ausgebildet. Die Schenkel 17, 18 sind etwa in Höhe der Käfiggurte 11 einstückig an das letzte Distanzstück 10 angeformt. Von den Käfiggurten 11 aus gesehen erstrecken sich die Schenkel in den Richtungen einer senkrecht auf der Käfiggurtunterseite und einer auf der Käfiggurtoberseite angeordneten Raumachse.

Die Schenkel 17, 18 sind über ein Gelenk 19 einstückig an das jeweils letzte Distanzstück 10 angeformt. Das Gelenk 19 ist hier durch einen federelastisch auslenkbaren Steg 20 gebildet, der einerseits an dem Schenkel 15, 16 und der andererseits an dem Distanzstück 10 einstückig angeformt ist. Der Steg 20 kann so dünnwandig ausgebildet sein, dass er ein Filmgelenk 21 bildet. Jedenfalls ist das Gelenk 19 so beschaffen, dass der Schenkel 15, 16 um eine Achse schwenken kann, die quer zur Laufrichtung und parallel zu den Laufbahnen angeordnet ist, an denen die Rollen 5 abwälzen.

Figur 6 zeigt ein gegenüber der Figur 5 modifiziertes Käfigband. Der wesentliche Unterschied zu dem Käfigband gemäß Figur 5 besteht darin, dass an die freien Enden 13, 14 des Käfigbandes 9 plattenförmige Schenkel 22, 23 anschließen, die dünnwandig aus Kunststoff ausgeführt sind und an sich biegeweich sind. Der Figur ist zu entnehmen, dass Anlageflächen 24, 25 der beiden Schenkel 22, 23 aneinander anliegen. Der erste Kontakt der Anlageflächen 24, 25 stellt sich ein unterhalb der Käfiggurte 11. Dies ist darauf zurückzuführen, dass in der gezeigten Abbildung die beiden freien Käfigenden 13, 14 im Bereich des nicht dargestellten Umlenkkanals 7 angeordnet sind. Durch die biegeweiche Ausbildung der Schenkel 22, 23 geben diese unter der Berührung mit dem jeweils anderen Schenkel 22, 23 nach, so dass der Kontaktpunkt nach oben in Richtung bis zur Höhe des Käfiggurtes 11 wandert. Diese Situation zeigt Figur 6. Ersichtlich sind die Schenkel 22, 23 unterhalb des Käfiggurtes 11 ausgelenkt. Dort sind die Schenkel 22, 23 an die Distanzstücke 10 einstückig angeformt mit der Folge, dass bei einem Kontaktpunkt in Höhe des Käfiggurtes 11 eventuell in Laufrichtung wirksame Druckkräfte in die neutrale Phase des Käfiggurtes 11 eingeleitet werden. Dies hat zur Folge, dass keine unerwünschten Kräfte quer zum Käfiggurt 10 auftreten, die eine unerwünschte Reibung im Führungskanal zur Folge hätte.

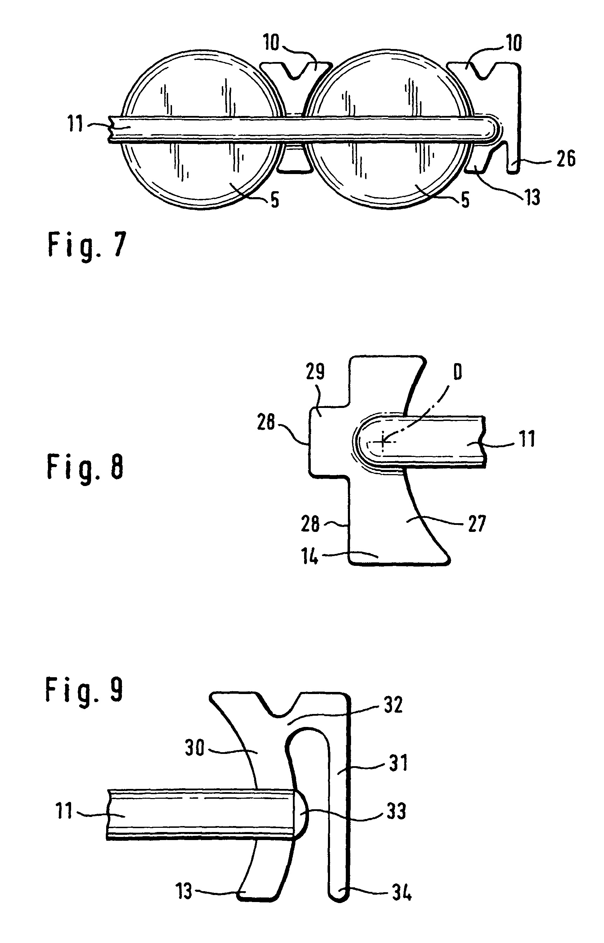

Figur 7 zeigt das Käfigband 9 wobei der Einfachheit halber nur eines der freien Enden abgebildet ist. An dieses freie Ende 13 ist ein Schenkel 26 etwa in Höhe des Käfiggurtes 11 einstückig an das Distanzstück 10 angeformt und erstreckt sich von dort in Richtung einer senkrecht auf der Käfiggurtunterseite angeordneten Raumachse. Dieser Schenkel 26 ist ebenfalls an sich biegeweich ausgeführt, so dass sich hier die gleichen Effekte einstellen wie sie bereits oben zur Figur 6 beschrieben wurden.

Figur 8 zeigt das freie Ende 14 eines hier nicht näher dargestellten Käfigbandes, wobei dieses freie Ende 14 einen Schenkel 27 aufweist, der etwa in Höhe des Käfiggurtes 11 einstückig an die beiden Käfiggurte 11 angeformt ist. In diesem nicht erfindungsgemäßen Fall bildet der Schenkel 27 zugleich ein Distanzstück insoweit, als der hier nicht näher dargestellte Wälzkörper in einer Tasche angeordnet ist, die durch diesen Schenkel 27 begrenzt ist. Der Schenkel 27 ist um eine Drehachse D schwenkbar angeordnet, wobei die Drehachse d in der Mitte der Gurthöhe quer zur Laufrichtung und parallel zur Laufbahn der Rollen 5 angeordnet ist. An seiner dem hier nicht dargestellten benachbarten Schenkel zugewandten Vorderseite ist ebenfalls eine Anlagefläche 28 ausgebildet, wobei jedoch ein Teil der Anlagefläche 28 an einer durch einen Vorsprung 29 gebildeten Erhebung vorgesehen ist. Wenn dieses so ausgebildete erfindungsgemäße Käfigband in dem Linearwälzlager umläuft und die beiden freien Enden in den Umlenkkanal einfahren, berühren sich die beiden Schenkel 27 zunächst mit den Schenkelteilen, die in der Figur 8 unterhalb des Käfiggurtes 11 ausgebildet sind. Da beide Schenkel 27 unter diesem Kontakt um die Drehachse D verschwenken kommen nun die Anlageflächen 28 im Bereich der Vorsprünge 29 miteinander in Kontakt. Durch diese Vorsprünge 29 ist demzufolge gewährleistet, dass gegebenenfalls in Laufrichtung auftretende Kräfte in der neutralen Phase in Höhe des Käfiggurtes übertragen werden. Auf diese Weise ist sichergestellt, dass keine unerwünschten Kräfte quer zum Käfiggurt 9 wirksam sind.

Figur 9 zeigt das freie Ende 13 des nicht näher dargestellten Käfigbandes, wobei ein an eine Käfigtasche begrenzender Steg 30 einstückig an die beiden Käfiggurtes 11 angeformt ist. Der Steg 30 erstreckt sich von dem Käfiggurt 11 weg in Richtung einer sowohl senkrecht auf der Käfiggurtunterseite als auch einer senkrecht auf der Käfiggurtoberseite angeordneten Raumachse. An das obere freie Ende des Steges 30 ist ein Schenkel 31 einstückig angeformt, der über ein Gelenk 32 einstückig mit dem Steg 30 verbunden ist und der sich bis über die Gurtunterseite hinaus erstreckt. Das Gelenk 32 ist hier durch einen biegeweichen dünnwandig ausgeführten Verbindungsteil ausgeführt. Ferner ist an dem Steg 30 an seiner dem Schenkel 31 zugewandten Seite ein Vorsprung 33 ausgebildet. In dem Linearwälzlager kommt es - wie auch schon weiter oben beschrieben wurde - zu einem Erstkontakt der beiden benachbarten Schenkel 31 im Bereich der freien Schenkelenden 34. Unter diesen Kontakt weichen die Schenkel 31 aus, wobei der Kontaktpunkt in Richtung auf das von dem freien Schenkelende 34 abgewandte Ende wandert, und zwar soweit, bis der Schenkel 31 zur Anlage an den Vorsprung 33 kommt. Auch in dieser Situation ist demzufolge sichergestellt, dass gegebenenfalls in Laufrichtung wirksame Druckkräfte in Höhe des Käfiggurtes 11 übertragen werden.

In allen hier abgebildeten Ausführungsbeispielen sind die Schenkel derart beweglich ausgebildet, dass eine Druckkraft zwischen einander anliegenden Anlageflächen in Höhe der Käfiggurte übertragen wird. Ferner sind die Schenkel in allen Ausführungsbeispielen innerhalb einer von dem Wälzkörperkanal begrenzten Querschnittsöffnung und außerhalb der Führungskanäle angeordnet. Ferner sind in allen Ausführungsbeispielen die Schenkel frei auskragend.

Das Käfigband kann in allen Ausführungsbeispielen aus mehreren Segmenten gebildet sein, die jeweils zwei freie Enden haben.

**Positionszahlenliste**
- 1: Führungswagen
- 2: Führungsschiene
- 3: Wälzkörperkanal
- 4: Tragkanal
- 4a: Laufbahn
- 4b: Laufbahn
- 5: Rolle
- 6: Rücklaufkanal
- 7: Umlenkkanal
- 8: Tasche
- 9: Käfigband
- 10: Distanzstück
- 11: Käfiggurt
- 12: Führungskanal
- 13: freies Ende
- 14: freies Ende
- 15: Schenkel
- 16: Schenkel
- 17: Anlagefläche
- 18: Anlagefläche
- 19: Gelenk
- 20: Steg
- 21: Filmgelenk
- 22: Schenkel
- 23: Schenkel
- 24: Anlagefläche
- 25: Anlagefläche
- 26: Schenkel
- 27: Schenkel
- 28: Anlagefläche
- 29: Vorsprung
- 30: Steg
- 31: Schenkel
- 32: Gelenk
- 33: Vorsprung
- 34: freies Schenkelende

## Patentansprüche

1. Linearwälzlager mit einem an einer Führungsschiene (2) über Wälzkörper (5) wälzlagerbaren Führungswagen (1), der mit wenigstens einem endlosen Wälzkörperkanal (3) für die Wälzkörper (5) versehen ist, welcher Wälzkörperkanal (3) einen Tragkanal (4) für tragende Wälzkörper (5), einen Rücklaufkanal (6) für rücklaufende Wälzkörper (5) und zu beiden Enden des Tragkanals (4) und des Rücklaufkanals (6) je einen diese endlos miteinander verbindenden Umlenkkanal (7) aufweist, in dem die Wälzkörper (5) aus dem Rücklaufkanal (6) in den Tragkanal (4) und umgekehrt umgelenkt werden, wobei die Wälzkörper (5) in Taschen (8) eines wenigstens zwei freie Enden (13, 14) aufweisenden Käfigbandes (9) aufgenommen sind, das in Laufrichtung gesehen zwischen aufeinander folgenden Wälzkörpern (5) angeordnete, die Käfigtaschen (8) begrenzende Distanzstücke (10) und zu beiden Seiten der Wälzkörperreihe angeordnete, die Distanzstücke (10) miteinander verbindende Käfiggurte (11) aufweist, wobei die Käfiggurte (11) in Führungskanälen (12) des Wälzkörperkanals (3) aufgenommen sind um das Käfigband (9) im Wälzkörperkanal (3) zu führen, **dadurch gekennzeichnet, daß** einander benachbarte freie Enden (13, 14) des Käfigbandes (9) jeweils mit einem im wesentlichen quer zum Käfigband (9) angeordnetenfrei auskragenden und beweglichen Schenkel (15, 16,22, 23, 26, 31) versehen sind, wobei die Schenkel (15, 16, 22, 23, 26, 31) an ihren einander zugewandten Seiten jeweils eine Anlagefläche (17, 18, 24, 25) füreinander aufweisen, und wobei der Schenkel (15, 16, 22, 23, 26, 31) an ein Distanzstück (10) oder ein davon abweichend ausgebildetes Teil anschließt.

2. Linearwälzlager nach Anspruch 1, bei dem die Schenkel (15,16, 22, 23, 26, 31) derart beweglich ausgebildet sind, dass eine Druckkraft zwischen einander anliegenden Anlageflächen (17, 18, 24, 25) in Höhe der Käfiggurte (11) übertragen wird.

3. Linearwälzlager nach Anspruch 1, bei dem der Schenkel (15, 16, 22, 23, 26, 31) innerhalb einer von dem Wälzkörperkanal (3) begrenzten Querschnittsöffnung und außerhalb der Führungskanäle (12) angeordnet ist.

4. Käfigband nach Anspruch 1, bei dem der Schenkel (15, 16, 22, 23, 26, 31) im Wesentlichen die Querschnittsöffnung des Wälzkörperkanals (3) ausfüllt.

5. Käfigband nach Anspruch 1, bei dem der Schenkel (15, 16, 22, 23, 26, 31) in Längsrichtung des Käfigbandes (9) gesehen eine Fläche umspannt, die innerhalb der Projektionsfläche der Wälzkörper (5) angeordnet ist.

6. Käfigband nach Anspruch 1, bei dem der Schenkel (15, 16, 22, 23, 26, 31) plattenförmig ausgebildet ist, wobei die von dem freien Ende des Käfigbandes (9) abgewandte Vorderseite (17, 18, 24, 25) des Schenkels (15, 16, 22, 23, 26, 31) eben ist.

7. Käfigband nach Anspruch 1, bei dem der Schenkel (15, 16, 22, 23, 26, 31) etwa in Höhe der Käfiggurte (11) einstückig an das Distanzstück (10) und/oder an die Käfiggurte (11) angeformt ist und sich von dort in Richtung einer senkrecht auf der Käfiggurtunterseite angeordneten Raumachse erstreckt.

8. Käfigband nach Anspruch 7, bei dem der Schenkel (15, 16, 22, 23, 26, 31) sich zusätzlich in Richtung einer senkrecht auf der Käfigoberseite angeordneten Raumachse erstreckt.

9. Käfigband nach Anspruch 1, bei dem der Schenkel (15, 16, 31) über ein Gelenk (19, 32) mit dem Distanzstück (10) und/oder den beiden Käfiggurten (11) verbunden ist.

10. Käfigband nach Anspruch 9, bei dem das Gelenk (19) durch ein Filmgelenk (21) gebildet ist.

11. Käfigband nach Anspruch 9, bei dem das Gelenk einen federelastisch auslenkbaren Steg (20) umfasst, der einerseits an dem Schenkel (15, 16) und der andererseits an dem Distanzstück (10) und/oder den beiden Käfiggurten (11) anschließt.

12. Käfigband nach Anspruch 9, bei dem der Schenkel (15, 16, 31) und das Gelenk (19, 32) einstückig miteinander verbunden sind.

13. Käfigband nach Anspruch 9, bei dem der Schenkel (15, 16, 31) und das Gelenk (19, 32) einstückig mit dem Distanzstück (10) und/oder den beiden Käfiggurten (11) verbunden ist.

14. Käfigband nach Anspruch 9, bei dem der Schenkel (22, 23, 26) an sich biegeweich ausgebildet ist.

15. Käfigband nach Anspruch 14 bei dem der Schenkel (22, 23, 26) dünnwandig aus Kunststoff ausgeführt ist.

16. Käfigband nach Anspruch 1, bei dem der Schenkel (27) in Höhe des Käfiggurtes (11) eine Erhebung als Teil der Anlagefläche aufweist.

## Claims

1. Linear rolling bearing, with a guide carriage (1) which is roll-mountable on a guide rail (2) via rolling bodies (5) and is provided with at least one endless rolling-body channel (3) for the rolling bodies (5), which rolling-body channel (3) has a carrying channel (4) for load-bearing rolling bodies (5), a return channel (6) for returning rolling bodies (5) and, at both ends of the carrying channel (4) and of the return channel (6), in each case a deflecting channel (7) which connects these endlessly to one another and in which the rolling bodies (5) are deflected out of the return channel (6) into the carrying channel (4), and vice versa, the rolling bodies (5) being received in pockets (8) of a cage strip (9) which has at least two free ends (13, 14) and which has, as seen in the running direction, spacer pieces (10), arranged between successive rolling bodies (5) and delimiting the cage pockets (8), and cage straps (11) arranged on both sides of the rolling-body row and connecting the spacer pieces (10) to one another, the cage straps (11) being received in guide channels (12) of the rolling-body channel (3), in order to guide the cage strip (9) in the rolling-body channel (3), **characterized in that** mutually adjacent free ends (13, 14) of the cage strip (9) are provided in each case with a freely projecting and movable leg (15, 16, 22, 23, 26, 31) arranged essentially transversely to the cage strip (9), the legs (15, 16, 22, 23, 26, 31) having, on their sides facing one another, in each case a bearing surface (17, 18, 24, 25) for one another, and the leg (15, 16, 22, 23, 26, 31) adjoining a spacer piece (10) or a part formed differently from this.

2. Linear rolling bearing according to Claim 1, in which the legs (15, 16, 22, 23, 26, 31) are designed to be movable in such a way that a pressure force is transmitted, level with the cage straps (11), between bearing surfaces (17, 18, 24, 25) bearing one against the other.

3. Linear rolling bearing according to Claim 1, in which the leg (15, 16, 22, 23, 26, 31) is arranged inside a cross-sectional orifice, delimited by the rolling-body channel (3), and outside the guide channels (12).

4. Cage strip according to Claim 1, in which the leg (15, 16, 22, 23, 26, 31) fills essentially the cross-sectional orifice of the rolling-body channel (3).

5. Cage strip according to Claim 1, in which, as seen in the longitudinal direction of the cage strip (9), the leg (15, 16, 22, 23, 26, 31) spans an area which is arranged within the projected area of the rolling bodies (5).

6. Cage strip according to Claim 1, in which the leg (15, 16, 22, 23, 26, 31) is of plate-shaped design, the front side (17, 18, 24, 25), facing away from the free end of the cage strip (9), of the leg (15, 16, 22, 23, 26, 31) being planar.

7. Cage strip according to Claim 1, in which the leg (15, 16, 22, 23, 26, 31) is formed, approximately level with the cage straps (11), in one piece onto the spacer piece (10) and/or onto the cage straps (11) and extends from there in the direction of a spatial axis arranged perpendicularly to the cage-strap underside.

8. Cage strip according to Claim 7, in which the leg (15, 16, 22, 23, 26, 31) additionally extends in the direction of a spatial axis arranged perpendicularly to the cage top side.

9. Cage strip according to Claim 1, in which the leg (15, 16, 31) is connected to the spacer piece (10) and/or the two cage straps (11) via a joint (19, 32).

10. Cage strip according to Claim 9, in which the joint (19) is formed by a film joint (21).

11. Cage strip according to Claim 9, in which the joint comprises a spring-elastically deflectable web (20) which, on the one hand, adjoins the leg (15, 16) and, on the other hand, adjoins the spacer piece (10) and/or the two cage straps (11).

12. Cage strip according to Claim 9, in which the leg (15, 16, 31) and the joint (19, 32) are connected to one another in one piece.

13. Cage strip according to Claim 9, in which the leg (15, 16, 31) and the joint (19, 32) are connected in one piece to the spacer piece (10) and/or to the two cage straps (11).

14. Cage strip according to Claim 9, in which the leg (22, 23, 26) is designed per se to be flexurally soft.

15. Cage strip according to Claim 14, in which the leg (22, 23, 26) is made, thin-walled, from plastic.

16. Cage strip according to Claim 1, in which the leg (27) has, level with the cage strap (11), an elevation as part of the bearing surface.

## Revendications

1. Palier linéaire à billes avec un chariot de guidage (1) apte à rouler en appui sur un rail de guidage (2) au moyen de corps de roulement (5), qui est doté d'au moins un canal à corps de roulement (3) sans fin pour les corps de roulement (5), canal à corps de roulement (3) qui comprend un canal de support (4) pour des corps de roulement porteurs (5), un canal de retour (6) pour des corps de roulement de retour (5) et un canal de renvoi (7) à chacune des deux extrémités du canal de support (4) et du canal de retour (6) reliant ceux-ci l'un à l'autre, dans lequel les corps de roulement (5) sont renvoyés du canal de retour (6) dans le canal de support (4) et inversement, dans lequel les corps de roulement (5) sont logés dans des alvéoles (8) d'une bande d'encadrement (9) présentant au moins deux extrémités libres (13, 14) qui, considérée dans la direction de défilement, comprend des pièces d'écartement (10) disposées entre des corps de roulement successifs (5) et limitant les alvéoles d'encadrement (8) et des ceintures d'encadrement (11) disposées sur les deux côtés de la rangée de corps de roulement et reliant l'une à l'autre les pièces d'écartement (10), dans lequel les ceintures d'encadrement (11) sont logées dans des canaux de guidage (12) du canal à corps de roulement (3) afin de guider la bande d'encadrement (9) dans le canal à corps de roulement (3), **caractérisé en ce que** des extrémités libres (13, 14) proches l'une de l'autre de la bande d'encadrement (9) sont respectivement munies d'une aile mobile et librement saillante (15, 16, 22, 23, 26, 31), disposée pour l'essentiel transversalement à la bande d'encadrement (9), dans lequel les ailes (15, 16, 22, 23, 26, 31) présentent respectivement, sur leurs faces tournées l'une vers l'autre, une face d'appui (17, 18, 24, 25) mutuelle, et dans lequel l'aile (15, 16, 22, 23, 26, 31) se raccorde à une pièce d'écartement (10) ou à une pièce formée différemment de celle-ci.

2. Palier linéaire à billes selon la revendication 1, dans lequel l'aile (15, 16, 22, 23, 26, 31) est réalisée sous forme mobile, de telle manière qu'une force de compression entre des faces d'appui (17, 18, 24, 25) appliquées l'une contre l'autre soit transmise à hauteur des ceintures d'encadrement (11).

3. Palier linéaire à billes selon la revendication 1, dans lequel l'aile (15, 16, 22, 23, 26, 31) est disposée à l'intérieur d'une ouverture de section transversale limitée par le canal à corps de roulement (3) et à l'extérieur des canaux de guidage (12).

4. Bande d'encadrement selon la revendication 1, dans laquelle l'aile (15, 16, 22, 23, 26, 31) remplit essentiellement l'ouverture de section transversale du canal à corps de roulement (3).

5. Bande d'encadrement selon la revendication 1, dans laquelle l'aile (15, 16, 22, 23, 26, 31), vue dans la direction longitudinale de la bande d'encadrement (9), couvre une face qui est disposée à l'intérieur de la surface de projection des corps de roulement (5).

6. Bande d'encadrement selon la revendication 1, dans laquelle l'aile (15, 16, 22, 23, 26, 31) est réalisée en forme de plaque, dans laquelle la face avant (17, 18, 24, 25) de l'aile (15, 16, 22, 23, 26, 31), située à l'opposé de l'extrémité libre de la bande d'encadrement (9), est plane.

7. Bande d'encadrement selon la revendication 1, dans laquelle l'aile (15, 16, 22, 23, 26, 31) est formée d'un seul tenant sur la pièce d'écartement (10) et/ou sur les ceintures d'encadrement (11), environ à hauteur des ceintures d'encadrement (11), et s'étend depuis cet endroit dans la direction d'un axe spatial disposé perpendiculairement à la face inférieure des ceintures d'encadrement.

8. Bande d'encadrement selon la revendication 7, dans laquelle l'aile (15, 16, 22, 23, 26, 31) s'étend en outre dans la direction d'un axe spatial disposé perpendiculairement à la face supérieure des ceintures d'encadrement.

9. Bande d'encadrement selon la revendication 1, dans laquelle l'aile (15, 16, 31) est reliée à la pièce d'écartement (10) et/ou aux deux ceintures d'encadrement (11) au moyen d'une articulation (19, 32).

10. Bande d'encadrement selon la revendication 9, dans laquelle l'articulation (19) est constituée par une articulation pelliculaire (21).

11. Bande d'encadrement selon la revendication 9, dans laquelle l'articulation comprend une nervure déformable à déformation élastique (20), qui se raccorde d'une part à l'aile (15, 16) et d'autre part à la pièce d'écartement (10) et/ou aux deux ceintures d'encadrement (11).

12. Bande d'encadrement selon la revendication 9, dans laquelle l'aile (15, 16, 31) et l'articulation (19, 32) sont reliées d'un seul tenant l'une à l'autre.

13. Bande d'encadrement selon la revendication 9, dans laquelle l'aile (15, 16, 31) et l'articulation (19, 32) sont reliées d'un seul tenant avec la pièce d'écartement (10) et/ou avec les deux ceintures d'encadrement (11).

14. Bande d'encadrement selon la revendication 9, dans laquelle l'aile (22, 23, 26) est par nature souple en flexion.

15. Bande d'encadrement selon la revendication 14, dans laquelle l'aile (22, 23, 26) est réalisée à paroi mince en matière plastique.

16. Bande d'encadrement selon la revendication 1, dans laquelle l'aile (27) présente à hauteur de la ceinture d'encadrement (11) une surélévation faisant partie de la face d'appui.
